Europäisches Patentamt

European Patent Office

Office européen des brevets

(19)

(11) Veröffentlichungsnummer: **0 009 180**
**B1**

(12) **EUROPÄISCHE PATENTSCHRIFT**

(45) Veröffentlichungstag der Patentschrift: **16.06.82**

(51) Int. Cl.³: **F 16 D  59/02**

(21) Anmeldenummer: **79103320.2**

(22) Anmeldetag: **06.09.79**

(54) **Elektromagnetisch lüftbare Federdruckbremse.**

(30) Priorität: **18.09.78 DE  2840565**

(43) Veröffentlichungstag der Anmeldung:
**02.04.80 Patentblatt 80/7**

(45) Bekanntmachung des Hinweises auf die Patenterteilung:
**16.06.82 Patentblatt 82/24**

(84) Benannte Vertragsstaaten:
**CH DE FR IT SE**

(56) Entgegenhaltungen:
**DE - A - 2 259 320**
**US - A - 2 516 603**

(73) Patentinhaber: **SIEMENS AKTIENGESELLSCHAFT**
**Berlin und München**
**Postfach 22 02 61**
**D-8000 München 22 (DE)**

(72) Erfinder: **Gempel, Hans, Dipl.-Ing.**
**Am Rhönblick 4**
**D-8741 Wollbach (DE)**

Courier Press, Leamington Spa, England.

## Elektromagnetisch lüftbare Federdruckbremse

Die Erfindung bezieht sich auf eine geräuschgedämpfte elektromagnetisch lüftbare Federdruckbremse, die einen eine Erregerwicklung enthaltenden Magnetkörper und eine in Richtung der Magnetkörperachse verschiebbar geführte, als lamelliertes Blechpaket ausgebildete Ankerscheibe aufweist, die auf der dem Magnetkörper abgewandten Seite einen Bremsbelag trägt und im unerregten Zustand der Erregerwicklung durch die Kraft einer Feder in Bremsstellung gehalten ist.

Eine solche Bremse ist durch die DE—A 22 59 320 bekannt. Zur Minderung des beim Lösen der Bremse durch die auf dem Magnetkörper auftreffende Ankerscheibe verursachten Schlaggeräusches ist bei dieser Bremse die Ankerscheibe als lamelliertes Blechpaket ausgeführt worden. Durch diese Maßnahme konnten die Schlaggeräusche wesentlich herabgesetzt werden. Sie betragen bei einer derartigen Bremse je nach Größe des Arbeitsluftspaltes 80 bis 90 dB(A). Eine solche Stärke des Schlaggeräusches wird in vielen Fällen immer noch als störend empfunden.

Der Erfindung liegt daher die Aufgabe zugrunde, eine elektromagnetisch lüftbare Federdruckbremse der eingangs beschriebenen Art derart weiterzubilden, daß das Schlaggeräusch beim Lösen der Bremse weiter vermindert wird.

Die Lösung der gestellten Aufgabe gelingt nach der Erfindung dadurch, daß innerhalb der Berührungsfläche von Magnetkörper und Ankerscheibe außer der die Bremskraft erzeugenden Feder mehrere Tellerfedern angeordnet sind, die keinen Beitrag zur Bremskraft leisten. Durch diese Federn wird ein Teil der Aufparallenergie aufgenommen und dadurch das Schlaggeräusch weiter vermindert. Bei einer solchen Ausführungsform wurden Schlaggeräusche gemessen, die je nach Größe des Arbeitsluftspaltes zwischen 60 bis 68 dB(A) lagen.

Weiterhin ist es vorteilhaft, daß die Tellerfedern in einer Versenkung des Magnetkörpers angeordnet sind, deren Tiefe der Materialstärke der Tellefedern entspricht. Hierdurch wird erreicht, daß die Ankerscheibe nach dem Aufprall auf den Magnetkörper satt an diesem anliegt und somit die Bremse sicher in der gelösten Stellung gehalten wird.

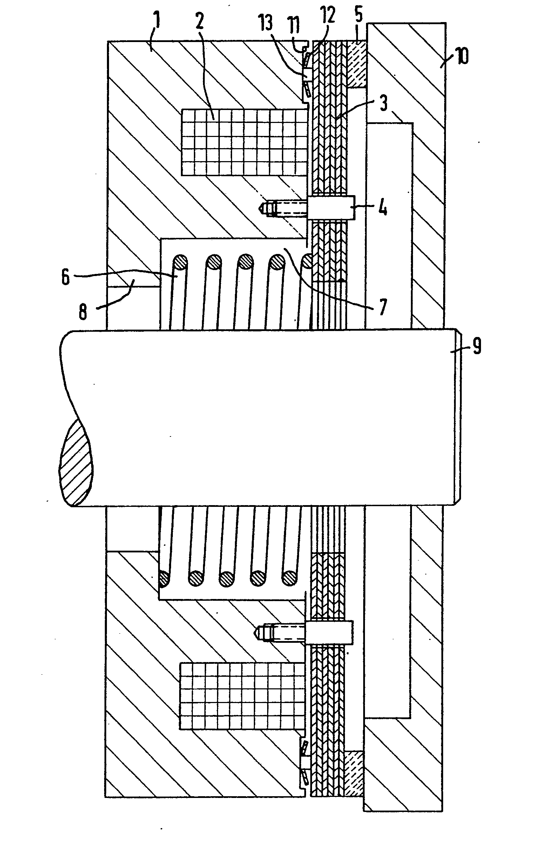

Anhand eines in der Zeichnung dargestellten Ausführungsbeispiels wird der Anmeldungsgegenstand nachfolgend näher beschrieben.

Mit 1 ist ein Magnetkörper bezeichnet, der im Gehäuse eines Motors fest angeordnet ist. Der Magnetkörper 1 ist mit einer Erregerwicklung 2 versehen, durch die der Magnetkörper 1 erregt wird. Axial vor dem Magnetkörper 1 ist eine aus einem lamellierten Blechpaket bestehende Ankerscheibe 3 auf Führungsbolzen 4 verschiebbar angeordnet. Auf der dem Magnetkörper 1 abgewandten Seite der Ankerscheibe 3 ist ein Bremsbelag 5 angebracht. Durch eine Feder 6, die in einer Innenbohrung 7 des Magnetkörpers 1 angeordnet ist und sich an einem Radialvorsprung 8 des Magnetkörpers 1 abstützt, wird die Ankerscheibe 3 gegen einen mit der Motorwelle 9 verbundenen Bremsring 10 gedrückt. Der Bremsring 10 kann beispielsweise auch als ein Teil des Motorlüfters ausgebildet sein.

Am äußersten Umfang des Magnetkörpers 1 sind gegenüberliegend zwei Versenkungen 11 ausgebildet, in denen jeweils eine Tellerfeder 12 auf einem axial vorstehende Zapfen 13 angeordnet ist.

Sobald der Magnetkörper 1 durch die Erregerwicklung 2 magnetisch erregt wird, wird die Ankerscheibe 3 von dem Magnetkörper 1 angezogen. Hierbei trifft die Ankerscheibe 3 zunächst auf die Tellerfedern 12 und wird durch diese bis zum Auftreffen auf den Magnetkörper 1 abgebremst. Da die Tiefe der Versenkung 11 der Materialstärke der Tellerfedern 12 entspricht, liegt die Ankerscheibe 3 nach dem Auftreffen auf den Magnetkörper 1 satt an diesem an und wird sicher in dieser Stellung gehalten. Durch das Anziehen der Ankerscheibe 3 wird der Bremsbelag 5 von dem Bremsring 10 abgehoben, so daß sich nunmehr die Welle 9 frei drehen kann. Die starke Verminderung des Schlaggeräusches wird durch die Kombination der als lamelliertes Blechpaket ausgebildeten Ankerscheibe 3 mit den zwischen den Magnetkörper 1 und der Ankerscheibe 3 angeordneten Tellerfedern 12 erzielt. Vergleichsmessungen mit massiven Ankerscheiben haben gezeigt, daß durch die Tellerfedern 12 allein keine Verminderung des Schlaggeräusches erfolgt.

## Patentansprüche

1. Geräuschgedämpfte elektromagnetisch lüftbare Federdruckbremse, die einen eine Erregerwicklung (2) enthaltenden Magnetkörper (1) und eine in Richtung der Magnetkörperachse verschiebbar geführte, als lamelliertes Blechpaket ausgebildete Ankerscheibe (3) aufweist, die auf der dem Magnetkörper (1) abgewandten Seite einen Bremsbelag (5) trägt und im unerregten Zustand der Erregerwicklung (2) durch Federkraft in Bremsstellung gehalten ist, dadurch gekennzeichnet, daß innerhalb der Berührungsfläche von Magnetkörper (1) und Ankerscheibe (3) außer der die Bremskraft erzeugenden Feder (7) mehrere Tellerfedern (12) angeordnet sind, die keinen Beitrag zur Bremskraft leisten.

2. Elektromagnetisch betätigte Bremse nach Anspruch 1, dadurch gekennzeichnet, daß die Tellerfedern (12) in einer Versenkung (11) des Magnetkörpers (1) angeordnet sind, deren Tiefe der Materialstärke der Tellerfedern (12) entspricht.

## Revendications

1. Frein, à amortissement des bruits, à desserrage électromagnétique à l'encontre d'un ressort, qui présente une culasse (1) magnétique, contenant une bobine (2) d'excitation, et une armature (3) annulaire, qui peut coulisser suivant la direction de l'axe de la culasse magnétique, qui est constituée d'un empilage de tôles feuilletées, qui porte une garniture (5) de frein sur la face éloignée de la culasse (1) magnétique et qui est maintenue en position de freinage par la force d'un ressort lorsque la bobine (2) d'excitation n'est pas excitée, caractérisé en ce que, au sein des surfaces de contact de la culasse (1) magnétique et de l'armature (3) annulaire sont disposés, outre le ressort (7) produisant la force de freinage, plusieurs ressorts (12) à disque, qui n'apportent pas de contribution à la force de freinage.

2. Frein actionné électromagnétiquement suivant la revendication 1, caractérisé en ce que les ressorts (12) à disque sont disposés dans un évidement (11) de la culasse (1) magnétique, dont la profondeur correspond à l'épaisseur de matière des ressorts (12) à disque.

## Claims

1. A silenced spring pressure brake which can be released electromagnetically and which has a magnet body (1) containing an excitation winding (2), and an armature disc (3), which is formed from laminated sheets and is movably guided in the direction of the axis of the magnet body, which carries a brake lining (5) on its side remote from the magnet body (1) and which is held in the braking position by means of a spring force in the unexcited state of the excitation winding (2), characterised in that in the contact surface of the magnet body (1) and the armature disc (3), there are arranged, in addition to the spring (7) which generates the braking force, a plurality of springs (12) which do not contribute to the braking force.

2. An electromagnetically operated brake as claimed in Claim 1, characterised in that the plate springs (12) are arranged in a recess (11) in the magnet body (1) the depth of which corresponds to the thickness of the material of the plate springs (12).

0 009 180